# DEMANDE DE BREVET EUROPEEN

(11) **EP 2 400 630 A2**
(43) Date de publication de la demande: **28.12.2011**
(21) Numéro de dépôt: 11154893.9
(22) Date de dépôt: 17.02.2011
(51) Int. Cl.: H02J 7/35

(54) **Chargeur solaire portatif et procédé d'utilisation associé**

(30) Priorité: 19.02.2010 FR 1051227
(71) Demandeur: Far Group Europe, 37700 Saint-Pierre-des-Corps (FR)
(72) Inventeur: Hurel, Christophe, 37550, Saint Avertin (FR)
(74) Mandataire: Marconnet, Sébastien

(57) **Abrégé**

L'invention concerne un chargeur solaire (1) portatif comportant un panneau solaire (2) de taille réduite et une batterie maître (5) destinée à stocker en continue l'énergie électrique produite par le panneau solaire (2). Le chargeur comporte en outre un convertisseur (7) pour transformer la tension de la batterie maître (5) en une tension (VS) compatible avec la tension d'un chargeur (9) externe.

L'invention propose ainsi un dispositif autonome, portatif et compact permettant de recharger une batterie esclave (10) par la batterie maître (5) dans les durées usuelles de charge indiquées par les constructeurs.

L'invention a notamment pour but de limiter au maximum les temps de décharge de la batterie maître (5) liés au fonctionnement du produit. A cet effet, le chargeur solaire (1) selon l'invention peut fonctionner suivant 3 modes de fonctionnement.

## Description

L'invention concerne un chargeur solaire portatif et son procédé d'utilisation. L'invention a notamment pour but de proposer une solution de charge autonome, monobloc et portable permettant de recharger les batteries d'appareils mobiles.

L'invention trouve une application particulièrement avantageuse, mais non exclusive, pour la recharge des batteries d'outils portatifs de type taille haie, perceuse, visseuse ou encore de téléphone portable.

On sait que ces batteries doivent généralement être rechargées régulièrement à l'aide d'un chargeur branché sur une source d'énergie. Les durées de charge indiquées par le constructeur (appelées dans la suite du document durées usuelles de charge) correspondent aux durées de charge nécessaires lorsque la batterie de l'outil est connectée à une source compatible avec les durées de charge usuelles, par exemple le réseau électrique domestique. Ces durées usuelles sont de l'ordre de 1 heure pour les appareils à charge courte et de 3 à 5 heures pour les charges lentes.

Toutefois, lorsque le réseau électrique n'est pas disponible, par exemple sur des chantiers en cours, il peut être nécessaire de disposer d'une source portable et autonome permettant de recharger, dans une durée usuelle, une batterie d'un appareil électrique de type visseuse ou autre.

On connaît des panneaux solaires qui fournissent de l'énergie électrique à partir de l'énergie solaire. Toutefois, ces panneaux ayant un rendement relativement faible, il faudrait disposer d'un panneau solaire de plusieurs mètres carrés pour pouvoir recharger la batterie dans une durée usuelle. Cela n'est bien entendu pas envisageable car le chargeur obtenu ne présenterait pas le caractère portatif recherché.

A l'inverse, si l'on dispose simplement d'un panneau solaire de taille réduite, il ne serait même pas possible d'obtenir une tension de sortie compatible avec les chargeurs usuels, de l'ordre de 220V environ.

L'invention se propose de répondre à cette double contrainte de portabilité et de puissance de charge en proposant un chargeur de faible encombrement permettant à tout moment et à tout endroit de recharger une batterie dans des durées usuelles de charge.

A cet effet, l'invention propose un chargeur portatif comportant une batterie maître rechargée en continue par l'énergie produite par le panneau solaire de taille réduite. Ce chargeur comporte en outre un convertisseur de tension convertissant la tension de sortie de cette batterie maître en une tension compatible avec les chargeurs classiques.

La batterie maître assure deux fonctions :
- la première est d'assurer le stockage en continue de l'énergie fournie par le panneau solaire et assurer ainsi un tampon entre le temps de charge (relativement long) en sortie du panneau solaire et le temps de charge (relativement court) souhaité en sortie du système.
- la deuxième est de délivrer une intensité plus élevée que l'intensité délivrée par le panneau solaire, ce qui autorise la conversion de la tension en sortie du panneau (et de la batterie maître) en une tension compatible pour le chargeur par le convertisseur.

En outre, le choix des différents éléments du système selon l'invention (taille du panneau, dimensions de la batterie, puissance du convertisseur de tension) permet de proposer un produit bon marché.

L'invention concerne donc un chargeur solaire portatif caractérisé en ce qu'il comporte :
- un panneau solaire de taille réduite,
- une batterie maître en relation avec le panneau solaire destinée à stocker en continue l'énergie électrique produite par le panneau solaire,
- un premier connecteur de sortie apte à être soumis à une tension de sortie continue générée par la batterie maître,
- un convertisseur pour transformer la tension de la batterie maître en une tension de sortie compatible avec la tension d'un chargeur d'une batterie esclave,
- ce convertisseur comportant au moins un deuxième connecteur de sortie apte à être soumis à la tension de sortie alternative, le chargeur externe étant destiné à être branché à ce deuxième connecteur,
- un deuxième voyant d'état indiquant si le deuxième connecteur est soumis à la tension de sortie alternative,
   caractérisé en ce qu'il comporte en outre
- un voyant de charge indiquant que la batterie maître est en charge,
- un voyant de niveau de charge indiquant la disponibilité d'une énergie dans la batterie maître,
- un premier voyant d'état indiquant si le premier connecteur est soumis à une tension continue,
- un deuxième voyant d'état indiquant si le deuxième connecteur est soumis à une tension alternative,
- un bouton d'activation,
- ce chargeur présentant 3 modes de fonctionnement pour limiter au maximum les temps de décharge de la batterie maître à savoir :
- un premier mode de fonctionnement dans lequel la batterie maître est en charge, le premier et le deuxième connecteur n'étant soumis à aucune tension de sortie, le voyant de charge uniquement étant allumé,
- un deuxième mode de fonctionnement dans lequel le premier connecteur uniquement est soumis à la tension de sortie continue, le premier voyant d'état étant allumé et le deuxième voyant d'état étant éteint,
- un troisième mode de fonctionnement dans lequel le deuxième connecteur est soumis à la tension de sortie alternatif, le deuxième voyant d'état étant allumé,
- le bouton d'activation permettant de passer du deuxième au troisième mode de fonctionnement.

Selon une réalisation, le système comporte un bouton de marche/arrêt permettant de passer du premier au deuxième mode de fonctionnement et réciproquement.

Selon une réalisation, le système présente un quatrième mode de fonctionnement activé lorsque la puissance délivrée dépasse un seuil dans lequel aucune tension n'est disponible sur le premier connecteur et le deuxième connecteur.

Selon une réalisation, le voyant de charge, le voyant de niveau de charge et les voyants d'état sont allumés simultanément de la même couleur.

Selon une réalisation, le seuil vaut 200 W.

Selon une réalisation, le système comporte un bouton de réinitialisation permettant de réinitialiser le chargeur lorsqu'il est entré dans le quatrième mode de fonctionnement.

Selon une réalisation, la batterie maître et le convertisseur sont intégrés à l'intérieur d'un seul et même boîtier.

Selon une réalisation, le panneau solaire présente une taille inférieure à 1 mètre carré, par exemple une dimension de 52cm de longueur et de 37.5cm de largeur.

Selon une réalisation, la batterie maître est de préférence une batterie du type au plomb à électrolytes gélifiées.

Selon une réalisation, la batterie maître présente un ampérage de l'ordre de 7A/h.

Selon une réalisation, la tension délivrée par le panneau solaire et la batterie maître est de l'ordre de 12V ou 5V.

Selon une réalisation, la tension de sortie du convertisseur est supérieure à la tension de la batterie maître et vaut environ 230V.

Selon une réalisation, le convertisseur comporte au moins deux connecteurs de sortie pour pouvoir recharger deux batteries esclaves simultanément.

Selon une réalisation, le système comporte un support articulé permettant d'orienter le panneau solaire par rapport à l'horizontale.

Selon une réalisation, le support est formé par un bras en forme de U ayant une base destinée à reposer sur le sol et deux côtés parallèles, ces deux côtés parallèles présentent chacun une première extrémité solidaire du côté de base et une deuxième extrémité liée en rotation au panneau solaire suivant un axe parallèle au sol et au panneau solaire.

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 : une représentation schématique d'un chargeur solaire portatif selon l'invention ;

Figure 2 : une représentation réelle des différents composants élémentaires formant le chargeur solaire portatif selon l'invention ;

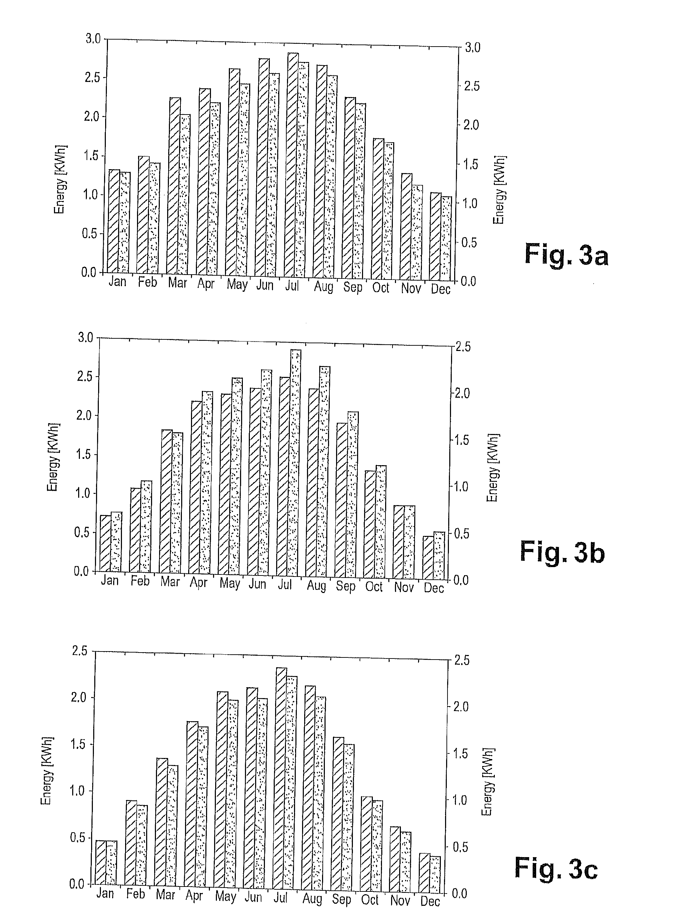

Figures 3a-3c : des graphiques montrant l'évolution de l'énergie solaire disponible et l'énergie fournie par le panneau solaire selon l'invention en fonction des mois de l'année respectivement à Marseille, Tours et Strasbourg pour une inclinaison fixe du panneau;

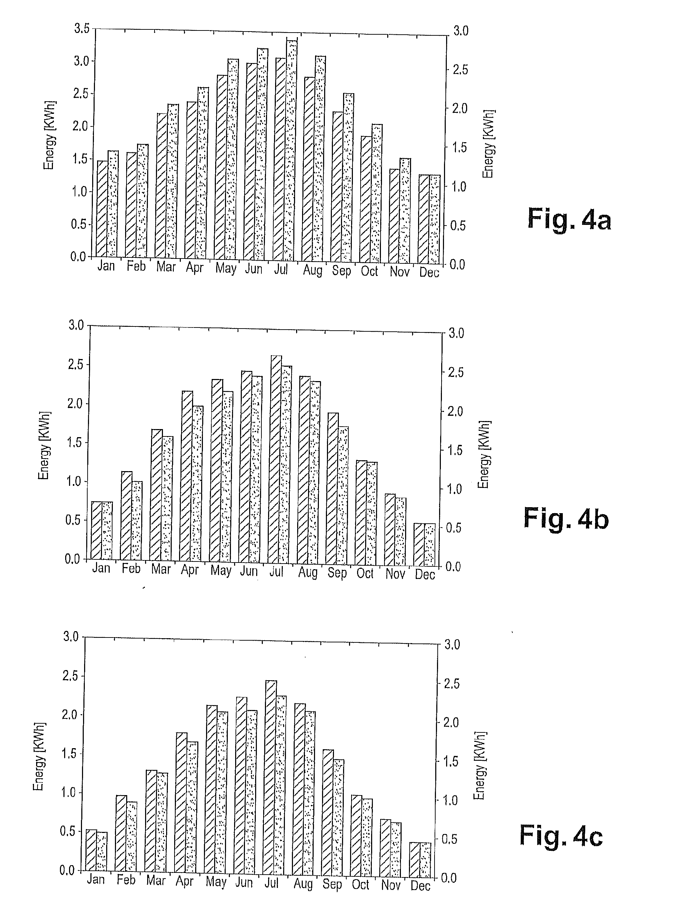

Figures 4a-4c : des graphiques montrant l'évolution de l'énergie solaire disponible et l'énergie fournie par le panneau solaire selon l'invention en fonction des mois de l'année respectivement à Marseille, Tours et Strasbourg pour une inclinaison variable du panneau selon les saisons ;

Figure 5 : un graphique montrant la différence d'énergie récupérée au cours d'une année par un panneau selon l'invention à inclinaison fixe et à inclinaison variable ;

Figure 6 : une représentation d'un chargeur solaire selon l'invention monté sur un support articulé permettant de faire varier l'inclinaison du panneau solaire.

Les éléments identiques conservent les mêmes références d'une Figure à l'autre.

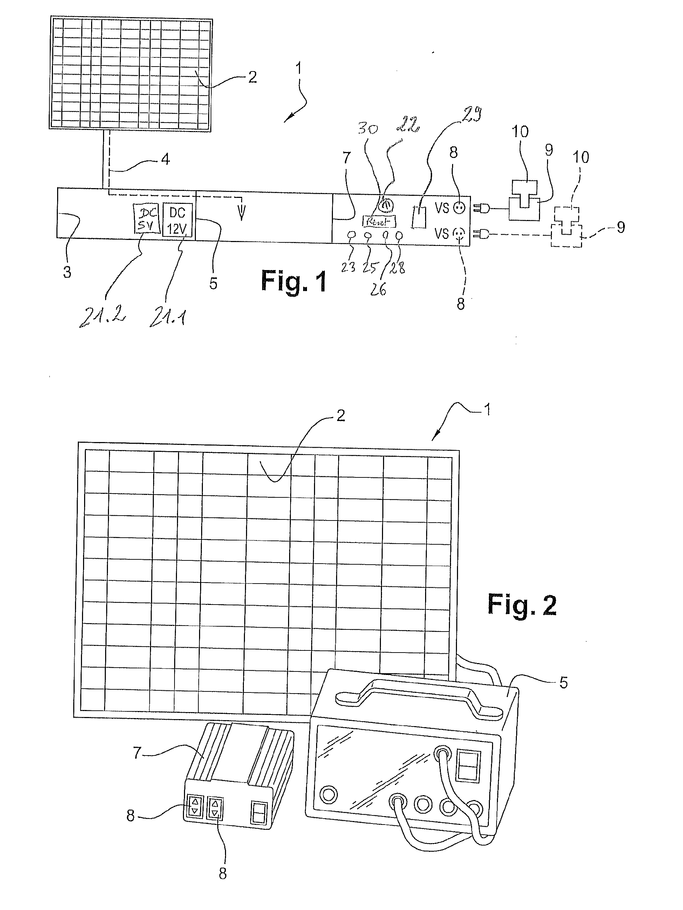

La Figure 1 montre un chargeur 1 selon l'invention comportant un panneau 2 solaire de taille réduite, de préférence inférieure à 1 mètre carré. Dans un exemple, le panneau 2 présente une longueur de 68cm environ et une largeur de 34cm environ. Selon une réalisation, ce panneau 2 fournit une puissance de l'ordre de 20W et une tension continue de l'ordre de 12V et/ou de 5V. Ce panneau 2 est associé à un contrôleur 3 qui régule la tension et le courant de sortie délivrés par le panneau 2 solaire.

Par ailleurs, une batterie 5, dite batterie maître, est en relation avec le panneau 2 afin de stocker en continue l'énergie fournie par le panneau 2. Ainsi le courant référencé 4 sur la Figure produit par le panneau 2 est stocké dans la batterie maître 5 après avoir été correctement régulé par le contrôleur 3. Cette batterie 5 présente une tension compatible, de préférence identique, à la tension de sortie du panneau 2. De préférence, l'ampérage de la batterie 5 est choisi pour permettre de recharger deux batteries esclaves dans des temps usuels de recharge. Dans un exemple, cet ampérage est de l'ordre de 7 A/h.

Cette batterie maître 5 est de préférence une batterie au plomb à électrolytes gélifiées (AGM gel). Ce type de batterie possède une durée de vie de 300 à 400 cycles selon les gammes. Cette batterie 5 peut être rechargée à n'importe quel niveau de décharge sans toutefois atteindre la décharge profonde.

Toutefois en variante, même si ces dernières ont des performances moindres pour l'application recherchée, la batterie maître 5 pourrait également prendre la forme d'une batterie Li-ion qui serait équipée d'un circuit de protection, ou d'une batterie NiCD qui dispose d'une durée de vie supérieure à la batterie au plomb (de l'ordre de 1000 cycles) mais qui a un effet mémoire qui pose problème puisqu'il faut la décharger complètement avant de la recharger sous peine de perdre la capacité nominale.

Le chargeur 1 comporte un connecteur 21.1 de sortie soumis à une tension de sortie continue de 5 Volts, et un connecteur 21.2 de sortie soumis à une tension de sortie continue de 12 Volts, ces tensions continues étant générées par la batterie maître 5.

En outre, un convertisseur de tension 7 assure la transformation de la tension de la batterie 5 en une tension de sortie VS compatible avec la tension du chargeur 9 de la batterie 10 à recharger. Cette tension de sortie VS supérieure à la tension de la batterie maître 5 est par exemple de l'ordre de 230V. Ce convertisseur 7 comporte au moins un connecteur 8 soumis à la tension de sortie alternative VS. Un chargeur 9 est destiné à être connecté à ce connecteur 8. De préférence, le convertisseur 7 comportera deux connecteurs 8 de sortie afin de pouvoir recharger deux batteries esclaves 10 simultanément. Dans un exemple de réalisation, le convertisseur 7 dispose d'une capacité de 100W.

Les batteries esclaves 10 pouvant être rechargées par le chargeur portatif selon l'invention sont des batteries de type 12V/1.2Ah ; 14.1V/1.2Ah ; 18V/2Ah. Par ailleurs, la puissance attendue des chargeurs 9 est comprise environ entre 15 et 18 W (pour une intensité de 0.08 A) pour les chargeurs de type lent, et de l'ordre de 70 W (pour une intensité de 0.33 A) pour les chargeurs de type rapide.

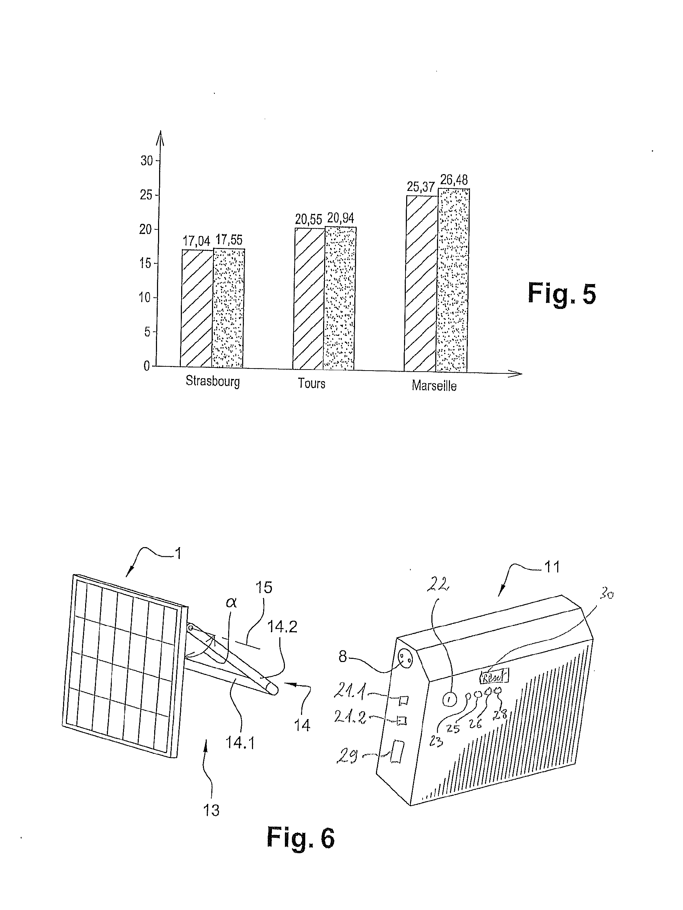

Comme montré sur les Figures 1 et 6, le chargeur comporte un bouton 22 de marche/arrêt.

Par ailleurs, un voyant 23 de charge indique que la batterie maître 5 est en charge, ce voyant 23 pouvant par exemple prendre la couleur bleue ou verte lorsque la batterie 5 est en charge ou étant éteint lorsque la batterie 5 n'est pas en charge.

Un voyant 25 de niveau de charge indique la disponibilité de énergie dans la batterie maître 5, ce voyant 25 prenant par exemple la couleur verte lorsque l'énergie stockée dans la batterie 5 est supérieure à un seuil (correspondant à une énergie suffisante pour recharger des équipements externes) ou étant éteint lorsque l'énergie est inférieure au seuil.

Un voyant d'état 26 indique si une tension continue est disponible sur les connecteurs 21.1, 21.2, ce voyant 26 étant allumé par exemple avec une couleur verte lorsqu'une tension est disponible ou éteint lorsqu'aucune tension n'est disponible.

Un voyant d'état 28 indique si une tension alternative est disponible sur le connecteur 8, ce voyant 26 étant allumé lorsqu'une tension est disponible ou éteint lorsqu'aucune tension n'est disponible.

Les voyants 23, 25, 26 et 28 sont formés de préférence par des LED. En variante, tout autre système lumineux pourrait être utilisé.

L'invention a notamment pour but de limiter au maximum les temps de décharge de la batterie maître 5 liés au fonctionnement du produit à savoir l'allumage des voyants 23, 25, 26, 28 et l'activation du convertisseur 7.

A cet effet, le chargeur 1 présente trois modes de fonctionnement à savoir :
- un premier mode de fonctionnement correspondant à l'état arrêté du chargeur. Dans ce mode, la batterie maître 5 est en charge, les connecteurs 21.1, 21.2 et le connecteur 8 n'étant soumis à aucune tension de sortie, le voyant 23 de charge uniquement étant allumé.
- un deuxième mode de fonctionnement correspondant à un premier état actif du chargeur. Dans ce mode, les connecteurs 21.1, 21.2 uniquement sont soumis à une tension de sortie continue, le connecteur 8 n'étant soumis à aucune tension, le voyant d'état 26 étant allumé et le voyant d'état 28 étant éteint. Ce mode correspond alors à un montage formé par le panneau 2 solaire et la batterie 5.
- un troisième mode de fonctionnement correspondant à un deuxième état actif du chargeur. Dans ce mode, le convertisseur 7 étant activé, le deuxième connecteur 8 est soumis à la tension de sortie alternatif, le deuxième voyant d'état 28 étant allumé. Le voyant 26 des connecteurs 21.1, 21.2 de tension continue est allumé dans la mesure où les tensions continues sont disponibles dans ce mode.

On note que le passage du premier au deuxième mode de fonctionnement est effectué à l'aide du bouton 22 marche/arrêt du chargeur 1. Pour passer du deuxième au troisième mode de fonctionnement et réciproquement, on utilise en outre un bouton 29 d'activation.

Un tel chargeur 1 permet ainsi d'économiser le temps de décharge de la batterie 5, dans la mesure où cette dernière n'est pas en permanence sollicitée pour l'allumage des voyants 23, 25, 26, 28, et pour le fonctionnement du convertisseur 7.

De préférence, le chargeur 1 présente également un quatrième mode de fonctionnement activé lorsque la puissance délivrée dépasse un seuil de tolérance. Dans ce mode, le voyant 23 de charge, le voyant 25 de niveau de charge et les voyants d'état 26, 28 sont allumés simultanément d'une même couleur, par exemple la couleur rouge. Aucune tension n'est alors disponible sur les connecteurs 8, 21.1 et 21.2. De préférence, ce seuil vaut 200 W.

Un bouton 30 de réinitialisation permet de réinitialiser le chargeur 1 lorsque le chargeur 1 est entré dans le quatrième mode de fonctionnement de sorte que le chargeur revient dans le premier ou le deuxième mode de fonctionnement.

La Figure 2 montre une représentation réelle des différents composants élémentaires du chargeur 1 formés par le panneau solaire 2, la batterie maître 5, et le convertisseur 7 de tension. Dans la réalisation finale, la batterie maître 5 et le convertisseur 7 sont intégrés à l'intérieur d'un seul et même boîtier 11 (cf Figure 6). On dispose alors d'un produit de taille réduite très facilement transportable.

Lors d'une utilisation du chargeur 1 selon l'invention, il suffit d'installer le panneau 2 à l'extérieur et de l'orienter dans une direction privilégiée par rapport au soleil. La tension fournie par le panneau 2 régulée par le contrôleur 3 sera alors appliquée aux bornes de la batterie maître 5 qui pourra se recharger en continue aussi longtemps que de l'énergie solaire sera reçue.

Dès que la batterie maître 5 sera suffisamment rechargée, l'utilisateur final pourra brancher un chargeur 9 au connecteur 8 pour effectuer la recharge de la batterie 10 d'un appareil mobile qui prélèvera alors la puissance stockée dans la batterie maître 5. Compte tenu de la capacité de la batterie maître 5, le temps de charge de la batterie esclave 10 pourra être sensiblement identique au temps usuel de charge observable lorsque la batterie 10 est branchée au réseau domestique d'électricité.

Les graphiques 3a à 3c montrent l'évolution de l'énergie solaire disponible pour le panneau 2 solaire (barre de gauche) et de l'énergie fournie par le panneau solaire 2 correspondant à l'énergie disponible moins les pertes (barre de droite) en fonction des mois de l'année respectivement à, Marseille, Tours et Strasbourg. Les graphiques 3a à 3c ont été obtenus pour une inclinaison fixe du panneau 2 de 35° et une orientation plein sud. Tandis que les graphiques 4a à 4c ont été obtenus pour une inclinaison variable du panneau 2 en fonction de la saison et une orientation plein sud.

Ces graphiques 3a-3c et 4a-4c permettent de déterminer les temps de charge de la batterie maître 5 en fonction des saisons. Il est ainsi possible de calculer le temps de charge de la batterie 5 à partir de la moyenne d'énergie récupérée sur l'ensemble des heures d'ensoleillement.

Ainsi le graphe 4a montre qu'avec une inclinaison variable, on dispose de 1500W/h pour le mois de janvier à Marseille, ce qui revient à une moyenne de Watts/jour de (1500W/h) / 31 jours = 48.4Wh/jour. En conséquence, pour une batterie 5 ayant une capacité de 90W/h, il faudra compter environ 2 jours de charge.

Suivant un raisonnement identique, à l'aide des graphes 4b et 4c, on détermine les temps de charge de la batterie 5 lorsque le panneau solaire 2 est installé à Tours et Strasbourg pour les mois de janvier et juillet et on aboutit aux résultats suivants pour la recharge d'une batterie de type 7.5Ah-12V (90Ah) :
En janvier à Marseille, il faudra environ 2 jours pour recharger la batterie.
En janvier à Tours, il faudra environ 4 jours pour recharger la batterie.
En janvier à Strasbourg, il faudra environ 5 jours pour recharger la batterie.
En juillet à Marseille, il faudra moins d'1 jour pour recharger la batterie.
En juillet à Tours, il faudra environ 1 jour pour recharger la batterie.
En juillet à Strasbourg, il faudra un peu plus d'un jour.

L'invention part également de la constatation que l'énergie récupérée varie grandement en fonction de l'inclinaison du panneau solaire suivant les saisons. En effet, la Figure 5 met en évidence que l'énergie récupérée au cours d'une année par un panneau solaire 2 orientable (barre de droite) est sensiblement supérieure à l'énergie récupérée par un panneau solaire 2 à orientation fixe (barre de gauche).

Comme représenté sur la Figure 6, il sera donc utile d'utiliser un panneau solaire 2 installé sur un support 13 articulé permettant d'ajuster l'inclinaison du panneau 2 par rapport à l'horizontale. A cet effet, ce support 13 comporte un bras 14 en forme de U ayant un côté de base 14.1 destiné à reposer sur le sol et deux côtés 14.2 parallèles (dont un seul est visible sur la Figure 6). Ces deux côtés parallèles 14.2 présentent chacun une première extrémité solidaire du côté de base 14.1 et une deuxième extrémité liée en rotation au panneau solaire 1 suivant un axe 15 parallèle au sol et au panneau solaire 1.

Ainsi, il est possible de faire varier l'angle α entre le bras 14 et le panneau 1, et de ce fait l'angle que fait le panneau 2 avec l'horizontale, ce qui permet d'orienter le panneau de manière optimale vers le soleil.

## Revendications

1. Chargeur solaire (1) portatif **caractérisé en ce qu'**il comporte :
- un panneau solaire (2) de taille réduite,
- une batterie maître (5) en relation avec le panneau solaire (2) destinée à stocker en continue l'énergie électrique produite par le panneau solaire (2),
- un premier connecteur (21.1, 21.2) de sortie apte à être soumis à une tension de sortie continue générée par la batterie maître (5),
- un convertisseur (7) pour transformer la tension de la batterie maître (5) en une tension de sortie (VS) compatible avec la tension d'un chargeur (9) d'une batterie esclave (10),
- ce convertisseur (7) comportant au moins un deuxième connecteur (8) de sortie apte à être soumis à la tension de sortie alternative (VS), le chargeur (9) externe étant destiné à être branché à ce deuxième connecteur,
- un deuxième voyant d'état indiquant si le deuxième connecteur (8) est soumis à la tension de sortie alternative,
**caractérisé en ce qu'**il comporte en outre
- un voyant (23) de charge indiquant que la batterie maître (5) est en charge,
- un voyant (25) de niveau de charge indiquant la disponibilité d'une énergie dans la batterie maître (5),
- un premier voyant d'état (26) indiquant si le premier connecteur (21.1, 21.2) est soumis à une tension continue,
- un deuxième voyant d'état (28) indiquant si le deuxième connecteur (8) est soumis à une tension alternative,
- un bouton (29) d'activation,
- ce chargeur présentant 3 modes de fonctionnement pour limiter au maximum les temps de décharge de la batterie maître (5) à savoir :
- un premier mode de fonctionnement dans lequel la batterie maître (5) est en charge, le premier (21.1, 21.2) et le deuxième connecteur (8) n'étant soumis à aucune tension de sortie, le voyant (23) de charge uniquement étant allumé,
- un deuxième mode de fonctionnement dans lequel le premier connecteur (21.1, 21.2) uniquement est soumis à la tension de sortie continue, le premier voyant d'état (26) étant allumé et le deuxième voyant d'état (28) étant éteint,
- un troisième mode de fonctionnement dans lequel le deuxième connecteur (8) est soumis à la tension de sortie alternatif, le deuxième voyant d'état (28) étant allumé,
- le bouton (29) d'activation permettant de passer du deuxième au troisième mode de fonctionnement.

2. Chargeur selon la revendication 1, **caractérisé en ce qu'**il comporte un bouton (22) de marche/arrêt permettant de passer du premier au deuxième mode de fonctionnement et réciproquement.

3. Chargeur selon la revendication 1 ou 2, **caractérisé en ce qu'**il présente un quatrième mode de fonctionnement activé lorsque la puissance délivrée dépasse un seuil dans lequel aucune tension n'est disponible sur le premier connecteur (8) et le deuxième connecteur (21.1, 21.2).

4. Chargeur selon la revendication 3, **caractérisé en ce que** le voyant (23) de charge, le voyant (25) de niveau de charge et les voyants d'état (26, 28) sont allumés simultanément de la même couleur.

5. Chargeur selon la revendication 3 ou 4, **caractérisé en ce que** le seuil vaut 200 W.

6. Chargeur selon l'une des revendications 3 à 5, **caractérisé en ce qu'**il comporte un bouton (30) de réinitialisation permettant de réinitialiser le chargeur (1) lorsqu'il est entré dans le quatrième mode de fonctionnement.

7. Chargeur selon l'une des revendications 1 à 6, **caractérisé en ce que** la batterie maître (5) et le convertisseur (7) sont intégrés à l'intérieur d'un seul et même boîtier (11).

8. Chargeur selon l'une des revendications 1 à 7, **caractérisé en ce que** le panneau solaire (2) présente une taille inférieure à 1 mètre carré, par exemple une dimension de 52cm de longueur et de 37.5cm de largeur.

9. Chargeur selon l'une des revendications 1 à 8, **caractérisé en ce que** la batterie maître (5) est de préférence une batterie du type au plomb à électrolytes gélifiées.

10. Chargeur selon l'une des revendications 1 à 9, **caractérisé en ce que** la batterie maître (5) présente un ampérage de l'ordre de 7A/h.

11. Chargeur selon l'une des revendications 1 à 10, **caractérisé en ce que** la tension délivrée par le panneau solaire (2) et la batterie maître (5) est de l'ordre de 12V ou 5V.

12. Chargeur selon l'une des revendications 1 à 11, **caractérisé en ce que** la tension de sortie (VS) du convertisseur est supérieure à la tension de la batterie maître (5) et vaut environ 230V.

13. Chargeur selon l'une des revendications 1 à 12, **caractérisé en ce que** le convertisseur (7) comporte au moins deux connecteurs (8) de sortie pour pouvoir recharger deux batteries (10) esclaves simultanément.

14. Chargeur selon l'une des revendications 1 à 13, **caractérisé en ce qu'**il comporte un support (13) articulé permettant d'orienter le panneau solaire (2) par rapport à l'horizontale.

15. Chargeur selon la revendication 14, **caractérisé en ce que** le support (13) est formé par un bras (14) en forme de U ayant une base (14.1) destinée à reposer sur le sol et deux côtés (14.2) parallèles, ces deux côtés parallèles (14.2) présentent chacun une première extrémité solidaire du côté de base (14.1) et une deuxième extrémité liée en rotation au panneau solaire (2) suivant un axe (15) parallèle au sol et au panneau solaire (1).
